(19) Europäisches Patentamt
European Patent Office
Office européen des brevets

(11) Publication number: **0 185 052**
**B1**

(12) # EUROPEAN PATENT SPECIFICATION

(45) Date of publication of patent specification: **14.03.90**

(51) Int. Cl.$^5$: **C 08 L 25/04,** C 08 L 51/04

(21) Application number: **85902842.5**

(22) Date of filing: **17.05.85**

(86) International application number:
**PCT/US85/00933**

(87) International publication number:
**WO 85/05370 05.12.85 Gazette 85/26**

(54) **IMPACT-MODIFIED MONOVINYLIDENE AROMATIC POLYMER INJECTION MOLDING RESINS.**

(30) Priority: **21.05.84 US 612204**

(43) Date of publication of application:
**25.06.86 Bulletin 86/26**

(45) Publication of the grant of the patent:
**14.03.90 Bulletin 90/11**

(84) Designated Contracting States:
**BE DE FR GB IT NL SE**

(56) References cited:
**JP-A-55 164 207**
**US-A-3 976 725**
**US-A-4 145 376**
**US-A-4 255 315**
**US-A-4 282 334**

(73) Proprietor: **THE DOW CHEMICAL COMPANY**
**2030 Dow Center Abbott Road P.O. Box 1967**
**Midland Michigan 48640-1967 (US)**

(72) Inventor: **JONES, Mary, Ann**
**4963 N. Eastman**
**Midland, MI 48640 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to impact-modified monovinylidene aromatic polymer resin compositions having improved suitability for injection molding and to improved injection molded articles prepared therefrom.

In general, in the production of injection molded articles from an impact-modified monovinylidene aromatic resin, it is necessary to have a resin having good processability, which resin, when molded into articles, produces articles which are strong, heat resistant and have a desirable surface appearance. Regarding surface appearance, particular difficulty has been encountered in developing impact-modified monovinylidene aromatic polymer resins which, when molded into articles, do not produce flow lines on the surface of the article. This problem has been particularly acute in the injection molding of complex parts such as television cabinets where there is a large surface area, sections of differing thickness and a number of rib sections presenting many channels to the flowing resins.

Kruse et al., in U.S. Patent No. 4,187,260, teach that certain diperoxy-type initiators can be used to prepare impact-modified monovinylidene aromatic polymer compositions. It is maintained that such compositions produce molded articles having better surface characteristics. Kruse et al. teach that the molecular weight distribution which is produced using the diperoxy-type initiators results in reduced melt instability. Articles molded from the resins, therefore, have smooth, unfractured surfaces. Flow lines, however, do not result from melt instability or melt fracture and can still be a problem.

Cutter, in U.S. Patent No. 4,137,388, discloses polystyrene resins, not reinforced by a rubber, having broad molecular weight distributions. Japanese Patent Announcement Kokai 55/164,207 discloses polystyrene resins having a specified broad molecular weight distribution.

US—A—3,976,725 refers to a high impact strength resin composition comprising a polyphenylene ether and a rubber modified polystyrene resin. With reference to the modified high impact polystyrene data of commercial resins are disclosed. One product comprises about 20.7% by weight of the composition of an elastomeric phase dispersed through the polystyrene matrix having an $\bar{M}w$ of about 251.000 and a $\bar{M}n$ of about 73.000 resulting in a $\bar{M}w$/Mn ratio of 3.44. The upper limit of the weight average molecular weight Mw of the polystyrene is mentioned as about 260.000, but values of 164.000, 209.000, 251.000, and 252.000 are also mentioned. For blending with polyphenylene ether a polystyrene having a Mw/Mn ratio greater than 3.5, preferably from 3.5 to 5.0, is used.

In this reference is cited the Encyclopaedia of Polymer Science and Technology Vol. 13 page 403, where $\bar{M}w/\bar{M}n$ values are listed which are between 2.42 and 3.44 and $\bar{M}w$ valued between 209.000 and 252.000.

JP—A—55 164 207 describes a styrene molding polymer having a unique molecular weight distribution. The polymers of the reference possess a "flattened" molecular weight curve obtained by simultaneously increasing both the high molecular weight and the low molecular weight fraction of the polymer. In particular, at least 15 weight percent or more of the polymer has a molecular weight of 50.000 or less.

It is an object of the present invention to provide an improved injection molding composition by which the flowlines otherwise visible on the surface of molded articles are eliminated or reduced. Another objective of the present invention is to provide improved injection molded articles wherein the flowlines are eliminated or reduced.

It has been found that an impact-modified monovinylidene aromatic polymer, wherein the monovinylidene aromatic polymer has a specific broad molecular weight distribution, can be readily injection molded into articles wherein the flowlines are reduced or eliminated. It has been found that the above objectives are achieved with an improved, impact-modified injection molding resin composition comprising a reinforcing amount of up to 40 percent by weight based on the total resin weight of an impact improving polymer and a monovinylidene aromatic polymer having (a) a weight average molecular weight (Mw) of from 8.4 to 13.6 times the entanglement molecular weight of the monovinylidene aromatic polymer (EMW); (b) a ratio of Mw to number average molecular weight Mn greater than 2.4, characterized in that

(c) less than 10 percent by weight of the monovinylidene aromatic polymer molecules have molecular weights below 1.3 times the entanglement molecular weight; and (d) 34 to 42 percent by weight of the monovinylidene aromatic polymer molecules have molecular weights below 5.2 times the EMW.

The resin composition has good melt flow properties and is able to be injection molded into articles having good combinations of physical properties and surface appearance.

It has also been found that injection molding processes using such resin compositions are improved and produce improved impact resistant, injection molded articles having reduced numbers of flowlines.

The polymers to which the present invention is applicable include monovinylidene aromatic polymers. As used herein monovinylidene aromatic polymers are polymers comprising polymerized therein at least 50 weight percent based on polymer weight, preferably 90 and most preferably 100 weight percent, of one or more monomers of the formula:

$$
\begin{array}{c} Ar \\ | \\ C{=}CH_2 \\ | \\ R_1 \end{array}
$$

wherein $R_1$ is hydrogen or an alkyl radical containing three carbons or less, and Ar is phenyl, halo-phenyl, alkylphenyl or alkylhalophenyl. The present invention is particularly suited to polystyrene, poly para-vinyl toluene and copolymers of styrene with α-methyl styrene. Copolymers of styrene with other copolymerizable monomers such as acrylonitrile are also advantageously utilized according to the present invention.

According to the present invention, monovinylidene aromatic polymer resins which can be molded into articles having reduced flowlines are obtained when the polymer has an average molecular weight within a specified range, a limited amount of polymer molecules having molecular weights below certain minimum molecular weights and a specified ratio of Mw to Mn. It has been found that the required molecular weights can be expressed for a broad range of monovinylidene aromatic polymers in terms of a multiple of the entanglement molecular weight of the monovinylidene aromatic polymer of interest. The term "entanglement molecular weight" as used herein will be further discussed and defined below. Thus, it has been found that the above-described improved property combinations can be observed where the monovinylidene aromatic polymer meets certain requirements. First, the weight average molecular weight (Mw) must be 8.4 to 13.6 times the entanglement molecular weight of the polymer. Second, less than 10 percent by weight of the polymer molecules can have molecular weights below 1.3 times the entanglement molecular weight of the polymer, and 34 to 42 percent by weight of the polymer molecules can have molecular weights below 5.2 times the entanglement molecular weight of the polymer. Third, the ratio of Mw to Mn is greater than 2.4. Preferably, resins are produced wherein the polymer has a Mw of 9.9 to 13.1 times the entanglement molecular weight. It is also preferable that less than 9 percent by weight of the polymer molecules have molecular weights below 1.3 times the entanglement molecular weight and 36 to 40 percent by weight of the polymer molecules have molecular weights below 5.2 times the entanglement molecular weight. Preferably, the ratio of Mw to Mn is from 3 to 3.4.

Techniques for determining the entanglement molecular weight of a polymer composition are known in the art, as are the entanglement molecular weights for many different polymer compositions. See, for example, January 25, 1966, *Chemical Reviews*, Volume 66, No. 1, pages 1 through 25, for an article by Porter and Johnson giving a general overview of this theory. See also a May, 1981 report by Donald and Kramer entitled "Effect of Molecular Entanglements on Craze Microstructure in Glassy Polymers" identified as MSC Report No. 4407 and available at the Department of Materials Science and Engineering, Materials Science Center, Cornell University, Ithaca, New York. The technique for the determination of entanglement molecular weight used herein was described in a 1979 address by J. T. Seitz entitled "Measurements of Entanglement Length in Broad Molecular Weight Systems", presented at the 50th Golden Jubilee of the Rheology Society in Boston, Massachusetts. In this technique, a sample of polymer is examined by dynamic mechanical analysis. This is conveniently done using a Mechanical Spectrometer manufactured by Rheometrics, Inc. Such analysis is done using a sample stretching frequency of 0.1 hertz and increasing the sample temperature at a rate of 1°C per minute. In this way, the temperature and the storage modulus are found at the minimum point on the Tan δ curve (Tan $\delta_{min}$) after the temperature goes above the glass transition temperature of the sample. The following equation then can be used to calculate the entanglement molecular weight of that polymer composition.

$$\text{Entanglement molecular weight} = \frac{\rho R T_{min}}{G'_{min}} [1-0.36(\text{Tan}\delta_{min})]^{1.25},$$

where

$\rho$=density in grams per cubic centimeter at Tan $\delta_{min}$

R=gas constant

$T_{min}$=temperature in Kelvin at Tan $\delta_{min}$

$G'_{min}$=storage modulus in dynes per square centimeter at Tan $\delta_{min}$.

($dyn/cm^2=10^{-5}N/cm^2=Pa$).

This equation then gives the entanglement molecular weight for polymers. This technique or a technique which produces results consistent herewith should be used to determine entanglement molecular weights for the purpose of application of the present invention.

The entanglement molecular weight values for several polymers as determined by this technique are listed in Table I, below.

TABLE I
Entanglement molecular weights for various polymers

| Polymer | Entanglement molecular weight |
|---|---|
| Polystyrene | 19,100 |
| Random copolymer of styrene and α-methylstyrene (80/20) | 17,300 |
| Random copolymer of styrene and α-methylstyrene (50/50) | 12,600 |
| Random copolymer of styrene and acrylonitrile (64/36) | 11,600 |
| Poly para-vinyltoluene | 28,400 |
| Poly para-tertiarybutylstyrene | 43,400 |

The terms "weight, number and 'Z' average molecular weights' as used herein are well known in the art. As used herein, they are determined by gel permeation chromatography (GPC).

It is well known in the art to incorporate into brittle resins, such as monovinylidene aromatic polymer resins, amounts of impact-improving polymer (also called impact modifier) to prepare so-called rubber- or impact-modified monovinylidene aromatic polymer resins which are more resistant to breaking under a sudden impact than the same resin not containing the reinforcing polymer.

The reinforcing polymers suitable for use in the present invention are well known and include ethylene-propylene-terpolymer (EPDM) rubbers and polymers containing polymerized therein at least 50 percent by weight of one or more conjugated diene monomers such as butadiene and/or isoprene, preferably at least 60 percent by weight of the conjugated diene monomer. Such polymers preferably should have a glass transition temperature, as measured by ASTM D 3418-81, below 0°C, preferably below −20°C and most preferably below −40°C. Impact modifiers include polymers of greater than 50 weight percent butadiene, preferably greater than 60 weight percent. Where copolymers of conjugated diene monomers are used, the preferred comonomer is a monovinylidene aromatic monomer, preferably styrene.

In general, the amount of the reinforcing rubber polymer can vary depending on the properties desired to be achieved in the resultant resin. Typically, however, the impact-modified monovinylidene aromatic polymer composition will contain up to 40 percent by weight impact improving polymer based on total resin weight, preferably 5 to 30 percent by weight.

The present invention is particularly applicable to impact-modified polystyrene (also referred to as High Impact Polystyrene or HIPS) and can be readily illustrated with HIPS resins. It has been determined as described above that the entanglement molecular weight of polystyrene is 19,100. Therefore, making the above-described calculations, polystyrene resins according to the present invention have an Mw of from 160,000 to 260,000, preferably from 190,000 to 250,000. The polystyrene according to the present invention is further characterized by the fact that less than 10 percent by weight of the polymer molecules, preferably less than 9 weight percent, have molecular weights below 25,000 and 34 to 42 percent by weight of the polymer molecules, preferably 36 to 40 weight percent, have molecular weights below 100,000. The molecular weight data for polystyrene discussed herein is determined by gel permeation chromatography (GPC). The GPC analysis in the present teachings can be done using a GPC column which is linear in the range of molecular weights of from about 600 to about 2,000,000.

It has been found to be critical to optimize the physical property combinations in the impact-modified resins according to the present invention to have the proper percent by weight of polystyrene molecules having molecular weights below 25,000. It has been found desirable to keep this weight fraction below 10 percent by weight of the polymer, preferably below 9 percent by weight of the polymer. It has also been found critical in achieving optimized combinations of physical properties to control the percent by weight of polystyrene molecules having molecular weights less than 100,000. Generally desirable physical properties can be achieved when this weight fraction is 34 to 42 weight percent of the polymer, preferably 36 to 40 weight percent. It has been found that when these criteria are met the physical properties of the resultant polymer resin are quite satisfactory while the flowlines are reduced.

It has also been found desirable to control the amount of volatile material in the polymer compositions. Such volatile materials include residual solvent and monomer and also dimers and trimers. These materials desirably comprise less than 1.5 percent by weight of the impact-modified monovinylidene aromatic polymer compositions according to the present invention and preferably less than 1 percent by weight.

The high impact polystyrene resins produced according to the present invention are particularly suited for injection molding uses. For such uses, it has been found especially desirable if the resin compositions according to this invention, when compression molded, have a tensile strength at yield ($T_y$) of at least $2275 \times 10^4$ Pa (3,300 pounds per square inch), a 30 to 40 percent elongation (%E), a melt flow rate of 4 to 6 grams per 10 minutes and a Vicat Heat Distortion temperature (VHD) of at least 102°C (216°F). It has been found that such resins according to the present invention can be used to prepare improved injection molded articles which have reduced flow lines.

The compositions according to the present invention can be prepared in a single process by modification of known polymerization processes for producing impact-modified monovinylidene aromatic polymers or by blending several separately prepared elements together.

It has been found preferable to prepare the compositions according to the present invention by dissolving the impact improving polymer in the monomer(s) and optional diluent and then subjecting the mixture to polymerization conditions and thereby polymerizing the monomer(s). The polymerization conditions need to be such that the monovinylidene aromatic polymer produced has the desired molecular weight and molecular weight distribution. Preferably the conditions are such that a relatively high molecular weight polymer is produced in the first reaction zone. This can be accomplished by known techniques such as lower temperature, longer residence time, and lower concentration of solvents having a chain transfer effect. After production of the high molecular weight polymer, the reaction mixture can be exposed to conditions wherein a carefully controlled lower molecular weight polymer portion can be made. Such conditions can include higher temperature, higher initiator concentration, and addition of a chain transfer agent.

In the polymerization of polymers according to the present invention, the method for initiation is not critical as long as the necessary average molecular weights and molecular weight distributions are achieved. For example, the polymerization can be initiated and take place free radically or anionically. Suitable conditions for thermal free radical initiation as well as suitable radical and anionic initiator compositions are well known in the art. Representative free radical initiators include the peroxide initiators such as the peresters, e.g., tertiary butyl peroxybenzoate and tertiary butyl peroxyacetate; dibenzoyl peroxide; dilauryl peroxide; 1,1 - bis tertiary butyl peroxy - 3,3,5 - trimethylcyclohexane; 1,1 - bis - t - butylperoxycyclohexane; and di-cumyl peroxide. Representative anionic initiators include well known organo lithium initiators such as n-butyllithium.

The use of chain transfer agents has been found to be important to achieve the molecular weight distributions according to the present invention. The various chain transfer agents such as α-methylstyrene dimer and the mercaptans are well known in the art.

The present compositions may, of course, contain amounts of other commonly used additives such as, for example, fillers, stabilizers, pigments, and even plasticizers. In some cases, it may be desirable to modify the present compositions having as their base properties very good heat distortion temperatures combined with satisfactory melt flow rates and tensile strengths to produce so-called easy flow resins. In such cases, the addition of a plasticizer in amount up to 10 percent by weight, preferably less than 2 percent by weight, can provide even better melt flow rates than found in other resins having similar levels of strength and heat resistance. In any event, the addition of little or no plasticizer is preferred and is not necessary to achieve melt flow rates equivalent to those of other resins while maintaining better strength and heat resistance than other resins of similar processability.

Experiments

In the following experiments various test techniques are used to determine the indicated values. The samples tested were compression molded at 199°C (390°F). The tensile strength, elongation and modulus are determined by ASTM D-638 Izod impact strength is determined by ASTM D-256. Vicat heat distortion temperature is determined by ASTM D-1525. The melt flow rate is determined by ASTM D-1238, condition G. The Gardner dart impact resistance is determined by ASTM D-3029G. The Gardner gloss is determined by ASTM D-523.

The surface uniformity is determined by preparing a divided tray having the dimensions 16.5 centimeters (cm) by 25.4 cm by 3.8 cm (6.5 inches by 10 inches by 1.5 inches), with dividers forming the tray into 6 compartments. A Cincinnati Milicron brand injection molding machine is used having three heaters that heat the barrel to temperatures of 199°C, 204°C and 210°C (390°F, 400°F and 410°F) at progressive points in the barrel. The mold is maintained at 90°C. The molding cycle consists of a 6 second injection time, 6 second hold time, 18 second cooling time, 0.1 second decompression time and 2 second clamp opening time. The injection pressure is 69 mega pascals (MPa) (10,000 psi), the hold pressure is 38 MPa (5,500 psi) and the back pressure is 0.7 MPa (100 psi). The screw speed is 134 rpm, the shot size is 7.6 cm (3 inches) and the cushion is 1 cm (3/16 inch). A mold that had not been polished recently was used to aggravate the flow line problem. The molded trays were visually inspected and trays having more than 4 flow lines in three sections were rated bad, 3 or 4 flow lines in three sections were rated medium, 1 to 3 flow lines in two sections were rated good and no flow lines were rated excellent.

Example compositions are prepared using a reactor system divided into nine temperature zones, arranged in series and each about equal in volume. The reaction mixture flows through each zone in a plug-flow fashion with good agitation and mixing in the direction perpendicular to flow. A feed solution is

prepared consisting of 85.7 percent by weight styrene monomer, 8 percent by weight ethyl benzene solvent, 5.8 percent by weight high cis content polybutadiene rubber, 0.25 percent by weight hindered phenolic antioxidant, 0.25 percent by weight mineral oil and 0.04 percent by weight 1,1 - bis - t - butylperoxycyclohexane initiator. This feed solution is then divided into two portions, a main feed solution and a second feed solution. The main feed solution is heated to 65°C and supplied to the first reactor zone. The nine reactor zones are at the following temperatures respectively: 100°C, 106°C, 115°C, 121°C, 126°C, 137°C, 143°C, 156°C and 174°C. Polymerization occurs as the reaction mixture passes through the reactor zones. The reaction mixture is supplied to the first zone and removed from final zone at a rate sufficient to achieve a total residence time in the first three zones of about 2.1 hours. In the fifth reactor zone where the temperature is about 126°C and where about 35 to 55 percent by weight of the monomer has been converted to polymer, a second portion of the same feed solution is added to the reaction mixture at a rate of about 25 percent of the main feed solution. A third feed stream consisting of 97.2 weight percent ethylbenzene and 2.8 weight percent n-dodecylmercaptan is added to the seventh reactor zone where the temperature is 143°C and 51 to 52 percent by weight of the monomer has been converted to polymer. The reaction mixture removed from the ninth stage is devolatilized and the resin formed into pellets. The final product contained about 7.25 percent by weight rubber.

Various properties of the resin were measured and the results are shown in Table II below.

TABLE II

| | Molecular weight data |
|---|---|
| $M_w$ | 202,000 |
| $M_n$ | 71,200 |
| $M_z$ | 385,000 |
| $M_w/M_n$ | 2.84 |
| Wt % <100,000[1] | 39.54 |
| Wt % <25,000[2] | 7.65 |

| | Physical property data |
|---|---|
| Tensile strength | |
| at yield in MPa (psi) | 23.0 (3,340) |
| at rupture in MPa (psi) | 16.1 (2,340) |
| Elongation | 24% |
| Modulus in MPa (psi) | 1,920 ($2.79 \times 10^5$) |
| Izod in J/meter* (ft lbs/inch) | 92.9 (1.74) |
| Vicat heat distortion temperature | 102.6°C (216.6°F) |
| Melt flow rate (g/10 min) | 4.86 |
| Gardner dart impact resistance in Joules (inch lbs) | 8.6 (76) |
| Gardner gloss | 17% |
| Surface uniformtiy | Good |

[1] Weight percent of polymer molecules having molecular weight less than 100,000.
[2] Weight percent of polymer molecules having molecular weight less than 25,000.
* Joules per meter of notch.

A second example composition is obtained by blending together typical impact-modified polystyrene resin (IPS) and amounts of general purpose polystyrene (GP PS) not containing rubber. These components have the average molecular weight and molecular weight distribution necessary to provide the proper average molecular weight and molecular weight distribution in the resultant blend. The molecular weight

data and surface properties are reported below in Table III. The resultant composition also contained 10 percent by weight triblock copolymer of 70 percent butadiene and 30 percent styrene, 16 percent by weight ignition retarding additives, 1 percent by weight polyethylene and 0.10 percent by weight antioxidant.

Several rubber-modified polystyrene compositions prepared generally as described above in Examples 1 and 2 are compared below in Table IV to illustrate the criticality of obtaining the proper molecular weight distribution.

TABLE III

| | Molecular weight data | | |
|---|---|---|---|
| | IPS | GP PS | Resultant blend |
| Wt. % PS Contributed by component[1] | 56 | 44 | 100 |
| $M_w$ | * | 196,000 | 195,000 |
| $M_n$ | * | 42,200 | 74,200 |
| $M_z$ | * | 435,000 | 366,000 |
| $M_w/M_n$ | * | 4.6 | 2.6 |
| Wt. % <100,100[2] | * | 46.4 | 38.7 |
| Wt. % <25,000[3] | * | 14.6 | 6.6 |

| | Physical property data Resultant blend |
|---|---|
| Tensile strength at yield in MPa (psi) | 21.9 (3,170) |
| Tensile strength at rupture in MPa (psi) | 16.3 (2,370) |
| Elongation | 42% |
| Modulus in MPa (psi) | 20,400 ($2.96\times10^5$) |
| Izod in J/meter** (ft lbs/inch) | 65.7 (1.23) |
| Vicat heat distortion temperature | 102.4°C (216.3°F) |
| Melt flow rate (g/10 min) | 8.85 |
| Gardner dart impact resistance in Joules (inch/lbs) | 2.7 (24) |
| Gardner gloss | 17% |
| Surface uniformity | Excellent |

* Value not measured.
[1] Percent by weight of the polystyrene in the blend which is provided by the component.
[2] Weight percent of polymer molecules having molecular weight less than 100,000.
[3] Weight percent of polymer molecules having molecular weight less than 25,000.
** Joules per meter of notch.

TABLE IV

| Composition | $M_w$ (×10³) | $M_w/M_n$ | Wt. % <100,000[1] | Wt. % <25,000[2] | Elongation (%) |
|---|---|---|---|---|---|
| A | 199 | 2.9 | 40.1 | 7.9 | 31 |
| B | 202 | 2.8 | 39.5 | 7.6 | 24 |
| C | 203 | 3.2 | 40.6 | 9.8 | <20 |
| D | 203 | 3.1 | 39.9 | 8.6 | 39 |
| E | 210 | 3.2 | 39.7 | 9.1 | 32 |
| F | 217 | 3.2 | 38.5 | 8.1 | 27 |

[1] Weight percent polymer molecules having molecular weights less than 100,000.
[2] Weight percent polymer molecules having molecular weights less than 25,000.

## Claims

1. An improved impact modified injection molding resin composition comprising a reinforcing amount of up to 40 percent by weight based on the total resin weight of an impact improving polymer and a monovinylidene aromatic polymer having
(a) a weight average molecular weight (Mw) of from 8.4 to 13.6 times the entanglement molecular weight (EMW) of the monovinylidene aromatic polymer,
(b) a ratio of Mw to number average molecular weight (Mn) greater than 2.4, characterized in that
(c) less than 10 percent by weight of the monovinylidene aromatic polymer molecules have a molecular weight below 1.3 times the entanglement molecular weight and,
(d) 34 to 42 percent by weight of the monovinylidene aromatic polymer molecules have molecular weights below 5.2 times the EMW.

2. A resin composition according to claim 1 wherein the monovinylidene aromatic polymer is polystyrene having (a) a weight average molecular weight of from 160,000 to 260,000; (b) a ratio of Mw to Mn of greater than 2.4; wherein (c) less than 10 percent by weight of the polystyrene molecules have a molecular weight below 25,000; and (d) 34 to 42 percent by weight of the polystyrene molecules have a molecular weight below 100,000.

3. A resin composition according to claim 2 wherein the polystyrene has a weight average molecular weight of from 190,000 to 250,000.

4. A resin composition according to claim 3 wherein the polystyrene has a ratio of Mw to Mn of from 3 to 3.4.

5. A resin composition according to claim 4 wherein from 36 to 40 percent by weight of the molecules have molecular weights below 100,000.

6. A resin composition according to claim 5 wherein less than 9 percent by weight of the polystyrene molecules have molecular weights below 25,000.

7. A resin composition according to claim 1 wherein the monovinylidene aromatic polymer is a copolymer of styrene and acrylonitrile.

8. A resin composition according to claim 1 wherein the monovinylidene aromatic polymer is a polymer of para-vinyltoluene.

9. A resin composition according to claim 1 wherein the monovinylidene aromatic polymer is a copolymer styrene and alpha-methylstyrene.

10. An injection molded article prepared from a resin composition according to claims 1 to 9.

## Patentansprüche

1. Verbesserte schlagzäh modifizierte Spritzgußharzzusammensetzung enthaltend eine verstärkende Menge von bis zu 40 Gew.% bezogen auf Gesamtgewicht des Harzes eines die Schlagzähigkeit verbessernden Polymers und ein monovinylidenearomatisches Polymer mit
(a) einem gewichtsmittleren Molekulargewicht (Mw) von 8,4 bis 13,6-fachen des geknäuelten Molekulargewichts (EMw) des monovinylidenearomatischen Polymer,
(b) einem Verhältnis von Mw zu Zahlen mittlerem Molekulargewicht (Mn) von größer 2,4, dadurch gekennzeichnet, daß
(c) weniger als 10 Gew.-% der monovinylidenearomatischen Polymermoleküle ein Molekulargewicht unter dem 1,3-fachen des geknäuelten Molekulargewicht aufweisen,

(d) 34 bis 42 Gew.% der monovinylidenearomatischen Polymermoleküle Molekulargewichte unter dem 5,2-fachen des EMw aufweisen.

2. Harzzusammensetzung nach Anspruch 1, dadurch gekennzeichnet, daß das monovinylidenearomatische Polymer Polystyrol ist mit (a) einem gewichtsmittleren Molekulargewicht von 160,000 bis 260,000, (b) einem Verhältnis von Mw zu Mn von mehr als 2,4, wobei (c) weniger als 10 Gew.-% der Polystyrolmoleküle ein Molekulargewicht unter 25.000 aufweisen und (d) 34 bis 42 Gew.% der Polystyrolmoleküle ein Molekulargewicht unter 100,000 aufweisen.

3. Harzzusammensetzung nach Anspruch 2, dadurch gekennzeichnet, daß das Polystyrol ein gewichtsmittleres Molekulargewicht von 190.000 bis 250.000 aufweist.

4. Harzzusammensetzung nach Anspruch 3, dadurch gekennzeichnet, daß das Polystyrol ein Verhältnis Mw zu Mn von 3 bis 3,4 aufweist.

5. Harzzusammensetzung nach Anspruch 4, dadurch gekennzeichnet, daß von 36 bis 40 Gew.% der Moleküle Molekulargewichte unter 100,000 aufweisen.

6. Harzzusammensetzung nach Anspruch 5, dadurch gekennzeichnet, daß weniger als 9 Gew.% der Polystyrolmoleküle Molekulargewichte unter 25.000 aufweisen.

7. Harzzusammensetzung nach Anspruch 1, dadurch gekennzeichnet, daß das monovinylidenearomatische Polymer ein Copolymer von Styrol und Acrylnitril ist.

8. Harzzusammensetzung nach Anspruch 1, dadurch gekennzeichnet, daß das monovinylidenearomatische Polymer ein Polymer von Para-Vinyltoluol ist.

9. Harzzusammensetzung nach Anspruch 1, dadurch gekennzeichnet, daß das monovinylidenearomatische Polymer ein Copolymer von Styrol und Alpha-Methylstyrol ist.

10. Spritzgegossener Gegenstand hergestellt aus einer Harzzusammensetzung nach den Ansprüchen 1 bis 9.

## Revendications

1. Composition de résine de moulage par injection modifiée pour la résistance au choc améliorée, comprenant une quantité renforçante, atteignant au plus 40% en poids par rapport au poids total de la résine, d'un polymère améliorant la résistance au choc et un polymère aromatique monovinylidène ayant

(a) une masse moléculaire moyenne en poids (Mw) comprise entre 8,4 et 13,6 fois la masse moléculaire en enchevêtrement (EMw) du polymère aromatique monovinylidène,

(b) un rapport de Mw à la masse moléculaire moyenne en nombre (Mn) supérieur à 2,4, caractérisée en ce que

(c) moins de 10% en poids des molécules de polymère aromatique monovinylidène ont une masse moléculaire inférieure à 1,3 fois la masse moléculaire en enchevêtrement et

(d) 34 à 42% en poids des molécules de polymère aromatique monovinylidène ont des masses moléculaires inférieures à 5,2 fois la EMw.

2. Composition de résine selon la revendication 1, dans laquelle le polymère aromatique monovinylidène est du polystyrène ayant (a) une masse moléculaire moyenne en poids comprise entre 160 000 et 260 000, (b) un rapport de Mw à Mn supérieur à 2,4, dans lequel (c) moins de 10% en poids des molécules de polystyrène ont une masse moléculaire inférieure à 25 000, et (d) 34 à 42% en poids des molécules de polystyrène ont une masse moléculaire inférieure à 100 000.

3. Composition de résine selon la revendication 2, dans laquelle le polystyrène a une masse moléculaire moyenne en poids comprise entre 190 000 et 250 000.

4. Composition de résine selon la revendication 3, dans laquelle le polystyrène a un rapport de Mw à Mn compris entre 3 et 3,4.

5. Composition de résine selon la revendication 4, dans laquelle de 36 à 40% en poids des molécules ont des masses moléculaires inférieures à 100 000.

6. Composition de résine selon la revendication 5, dans laquelle moins de 9% en poids des molécules de polystyrène ont des masses moléculaires inférieures à 25 000.

7. Composition de résine selon la revendication 1, dans laquelle le polymère aromatique monovinylidène est un copolymère de styrène et d'acrylonitrile.

8. Composition de résine selon la revendication 1, dans laquelle le polymère aromatique monovinylidène est un polymère de para-vinyltoluène.

9. Composition de résine selon la revendication 1, dans laquelle le polymère aromatique monovinylidène est un copolymère de styrène et d'alpha-méthylstyrène.

10. Pièce moulée par injection préparée à partir d'une composition de résine selon les revendications 1 à 9.